# EUROPÄISCHE PATENTSCHRIFT

(11) **EP 3 907 005 B1**
(45) Veröffentlichungstag und Bekanntmachung des Hinweises auf die Patenterteilung: **19.01.2022**
(21) Anmeldenummer: 20172899.5
(22) Anmeldetag: 05.05.2020
(51) Int. Cl.: B01D 11/02, B01J 3/03, G01N 1/40, B01L 3/00

(54) **EXTRAKTIONSZELLE ZUR EXTRAKTION EINER PROBE**
EXTRACTION CELL FOR EXTRACTING A SAMPLE
CELLULE D'EXTRACTION PERMETTANT D'EXTRAIRE UN ÉCHANTILLON

(43) Veröffentlichungstag der Anmeldung: 10.11.2021
(73) Patentinhaber: LCTech GmbH, 84419 Obertaufkirchen (DE)
(72) Erfinder: AULWURM, Uwe, 84149 Velden/Vils (DE); BRANDLHUBER, Martin, 84427 St. Wolfgang (DE)
(74) Vertreter: Tetzner, Michael

(56) Entgegenhaltungen:
- EP-A1- 2 918 323
- WO-A1-96/27418
- US-B1- 7 101 477

## Beschreibung

Die Erfindung betrifft eine Extraktionszelle zur Extraktion einer Probe.

Mit Hilfe von Extraktionszellen werden üblicherweise unter erhöhter Temperatur und Druck entsprechende Analyten, wie z.B. Pestizide, PCB, PAK, Dioxine und andere Komponenten, aus einem zu untersuchenden Probenmaterial mit Hilfe von Lösungsmitteln extrahiert, die dann meist nach einer weiteren Reinigung einem Analysesystem zugeführt werden.

Extraktionszellen bestehen normalerweise aus einem rohrförmigen Extraktionskörper mit einem ersten und einen gegenüberliegenden zweiten Ende, die über Verschlussanordnungen verschlossen werden, sodass sich ein Innenraum zur Aufnahme einer Probe ergibt. Das Lösungsmittel oder ein anderes geeignetes Fluid wird über die Verschlussanordnungen zu- bzw. abgeführt. Die Extraktionskörper werden üblicherweise mittels Verschlussanordnungen verschlossen, die mit dem Extraktionskörper verschraubt werden, wie dies beispielsweise aus der EP 2 918 323 A1, der WO 96/27418 A1 und der US 7 101 477 B1 bekannt ist.

Verschraubungen haben jedoch den Nachteil, dass für den Zusammenbau bzw. die Demontage ein mehr oder weniger großer manueller Aufwand erforderlich ist. Weiterhin ist ein automatisiertes Aufsetzen bzw. Entfernen der Verschlussanordnungen aufwendig bzw. schwer umsetzbar. Dementsprechend ist auch eine automatische Entleerung der extrahierten Restprobe samt Filtern schwierig durchführbar. Darüber hinaus erfordern diese bekannten Extraktionszellen oftmals einen erhöhten Reinigungsaufwand aufgrund der Anzahl bzw. Komplexität der Komponenten.

Der Erfindung liegt daher die Aufgabe zugrunde, eine Extraktionszelle zur Extraktion einer Probe anzugeben, die sich durch einen schnellen Zusammenbau bzw. eine schnelle Demontage auszeichnet.

Erfindungsgemäß wird diese Aufgabe durch die Merkmale des Anspruches 1 gelöst.

Die erfindungsgemäße Extraktionszelle zur Extraktion einer Probe ist im Wesentlichen durch folgende Merkmale gekennzeichnet:
- einen rohrförmigen Extraktionskörper mit einem ersten und einem gegenüberliegenden zweiten Ende, der einen Innenraum zur Aufnahme der Probe aufweist,
- eine erste Verschlussanordnung zum abdichtenden Verschließen des ersten Endes des rohrförmigen Extraktionskörpers,
- eine zweite Verschlussanordnung zum abdichtenden Verschließen des zweiten Endes des rohrförmigen Extraktionskörpers, wobei
- die erste Verschlussanordnung einen ersten Fluidanschluss zum Zu- oder Abführen eines Fluids und die zweite Verschlussanordnung einen zweiten Fluidanschluss zum Zu- oder Abführen eines Fluids aufweist.

Des Weiteren ist zwischen dem Extraktionskörper und der ersten Verschlussanordnung sowie zwischen dem Extraktionskörper und der zweiten Verschlussanordnung jeweils wenigstens eine als permanentmagnetische Haftanordnung oder als Klettverschluss oder als silikonbasierender Verschluss ausgebildete Haftanordnung zum Festhalten der ersten und zweiten Verschlussanordnung am Extraktionskörper vorgesehen.

Durch die Haftanordnung ergibt sich der Vorteil, dass die Verschlussanordnung nicht verschraubt, sondern lediglich aufgesetzt bzw. abgezogen werden muss. Dadurch ist beim Aufsetzen bzw. Abnehmen der Verschlussanordnung lediglich eine lineare Bewegung der Verschlussanordnung entlang der Längsmittelachse des Extraktionskörpers erforderlich. Eine solche Bewegung kann auch auf einfache Art und Weise automatisiert durchgeführt werden. Bei einem Gewinde kann der Verschlusskörper nicht mit einer linearen Bewegung abgehoben werden, da das Gewinde diese Bewegungsrichtung blockiert.

Ein weiterer Vorteil der erfindungsgemäßen Haftanordnung gegenüber einer Schraubverbindung besteht auch darin, dass die Haltekraft, mit der die Verschlussanordnung auf dem Extraktionskörper festgehalten wird, gezielt eingestellt werden kann. Durch eine entsprechende Auswahl der Haftanordnung kann die Haltekraft, beispielsweise eines Permanentmagneten, auf die Erfordernisse (Gewicht der Verschlussanordnung, Gewicht der Probe, Anzahl der verwendeten Haftelemente...) abgestimmt werden, um einerseits einen sicheren Halt der Verschlussanordnung auf dem Extraktionskörper zu gewährleisten und andererseits ein Abheben der Verschlussanordnung ohne unnötigen Kraftaufwand durchführen zu können.

Die bevorzugte Ausführungsform der Erfindung besteht darin, dass die wenigstens eine Haftanordnung als permanentmagnetische Haftanordnung ausgebildet ist. Hierbei können Permanentmagneten, insbesondere Neodym- Samarium-Cobald- oder Ferritmagneten zur Anwendung kommen. Die Haftanordnung kann ein oder mehrere Haftelemente aufweisen, die ringförmig ausgebildet sind. Bevorzugt wird aber eine Ausführungsform, bei der an den Enden des Extraktionskörpers jeweils mehrere über den Umfang verteilt angeordnete erste Haftelemente vorgesehen sind, die mit einer entsprechenden Anzahl an zweiten Haftelementen an den beiden Verschlussanordnungen zusammenwirken. Die Haftanordnung ist so auszubilden, dass sie für den vorgesehenen Temperaturbereich von beispielsweise 200°C geeignet ist. Die Haftanordnungen ermöglichen eine schnelle Montage bzw. Demontage der Extraktionszelle. Außerdem ist auch eine automatisierte Handhabung leicht umsetzbar.

Gemäß einer weiteren Ausgestaltung der Erfindung weist die erste und zweite Verschlussanordnung jeweils einen äußeren und einen inneren Verschlusskörper auf, wobei der innere Verschlusskörper am äußeren Verschlusskörper verschiebbar geführt ist. Weiterhin ist zwischen dem Extraktionskörper und dem inneren Verschlusskörper vorzugsweise eine Dichtung vorgesehen, die durch Verschiebung des inneren Verschlusskörpers relativ zum äußeren Verschlusskörper zum Zwecke einer fluiddichten Verbindung komprimierbar ist. Dadurch ist es möglich, dass die Verschlussanordnungen eine erste Verschlussstellung (Vorverschlussstellung) aufweisen, in welcher der äußere Verschlusskörper über die wenigstens eine Haftanordnung am Extraktionskörper festgestellten wird und sich der innere Verschlusskörper relativ zum äußeren Verschlusskörper in einer die Dichtung noch nicht komprimierenden Stellung befindet. Weiterhin sehen die Verschlussanordnungen eine zweite Verschlussstellung (fluiddichte Verschlussstellung) vor, in welcher der äußere Verschlusskörper nach wie vor über die Haftanordnungen am Extraktionskörper festgehalten wird und sich der innere Verschlusskörper relativ zum äußeren Verschlusskörper in einer die Dichtung komprimierenden Stellung befindet.

Der klassische Einsatzbereich der erfindungsgemäßen Extraktionszelle liegt bei Temperaturen bis 200°C und Drücken von 0 bis 100 bar. Ein fluiddichter Verschluss des Extraktionskörpers ist bei hohen Drücken von bis zu 100 bar natürlich nicht durch die Haftanordnung praktikabel realisierbar. Die Verschlussanordnungen sehen daher die oben beschriebene eine erste und eine zweite Verschlussstellung vor, wobei in der ersten Verschlussstellung die Verschlussanordnung lediglich am Extraktionskörper festgehalten wird, um den auf diese Weise verschlossenen Extraktionskörper insbesondere in eine Einspannvorrichtung zu transferieren, in der die beiden inneren Verschlusskörper derart eingespannt werden, dass sie sich relativ zu ihren äußeren Verschlusskörpern in Richtung der Extraktionszelle bewegen und dabei die dazwischen angeordneten Dichtungen komprimieren, um auf diese Weise die fluiddichte zweite Verschlussstellung herstellen.

Die Zugabe eines Extraktionsfluids, üblicherweise ein Lösemittel, kann dann unter erhöhtem Druck erfolgen. Darüber hinaus kann sich der Druck des Extraktionsfluids durch die zur beschleunigten
Sobald die Extraktionszelle aus der Verspanneinheit wieder herausgenommen wird, kann sie auf schnelle und einfache Art und Weise durch Abheben der Verschlussanordnungen geöffnet werden. Der Zusammenbau und das Öffnen der Extraktionszellen werden daher durch die erfindungsgemäße Haftanordnung wesentlich vereinfacht und können darüber hinaus leicht automatisiert werden. Weiterhin besteht die Möglichkeit, das nach Abnahme der Verschlussanordnungen, beispielsweise durch einen Roboter, die Extraktionszelle automatisch in den Abfall entleert wird, wobei die Dichtungen und etwaige Fritten als Einweg-Komponenten ausgebildet sein können, was aber nicht zwingend erforderlich ist. Die Dichtung besteht vorzugsweise aus einem geeigneten Polymer, während die Fritte aus Polymeren bzw. Biopolymeren oder Metall bestehen kann.

Die Haftanordnung weist wenigstens ein erstes Haftelement und wenigstens ein mit diesem haftend zusammenwirkendes zweites Haftelement auf, wobei das wenigstens eine erste Haftelement an den Enden des Extraktionskörpers und das wenigstens eine zweite Haftelement an den Verschlussanordnungen befestigt ist. Dabei kann die Extraktionszelle am ersten und zweiten Ende jeweils einen Flansch aufweisen, die in der ersten und zweiten Verschlussstellung mit dem äußeren Verschlusskörper der zugehörigen Verschlussanordnung in festhaltendem Wirkkontakt stehen. Die erste und zweite Haftanordnung können jeweils wenigstens ein erstes Haftelement und wenigstens ein mit diesem haftend zusammenwirkendes zweites Haftelement aufweisen, wobei das wenigstens eine erste Haftelement am Flansch des Extraktionskörpers und das wenigstens eine zweite Haftelement am äußeren Verschlusskörpers befestigt ist. In einer weiteren Ausgestaltung können die ersten Haftelemente in Ausnehmungen im Flansch des Extraktionskörpers und die zweiten Haftelemente in Ausnehmungen der äußeren Verschlusskörper vorgesehen werden.

Die Befestigung der ersten und zweiten Haftelemente in den zugehörigen Ausnehmungen kann beispielsweise durch Pressung, Schrumpfsitz, Verschraubung oder Klebung erfolgen. Um eine möglichst zuverlässige Halterung der Verschlussanordnungen an den Extraktionskörper zu gewährleisten, sind an den Enden des Extraktionskörpers jeweils mehrere über den Umfang verteilt angeordnete erste Haftelemente vorgesehen, die mit einer entsprechenden Anzahl an zweiten Haftelementen an den beiden Verschlussanordnungen zusammenwirken.

Außerdem sind der erste Fluidanschluss am inneren Verschlusskörper der ersten Verschlussanordnung und der zweite Fluidanschluss am inneren Verschlusskörper der zweiten Verschlussanordnung angeordnet, sodass durch Verschiebung des inneren Verschlusskörpers und die dadurch bedingte Komprimierung der Dichtung der fluiddichte Verschluss zwischen dem Innenraum des Extraktionskörpers und den beiden Fluidanschlüssen gewährleistet ist.

Durch die Verwendung einer Haftanordnung zur Halterung der Verschlusskörper am Extraktionskörper besteht die Möglichkeit, die Verschlussanordnung in Richtung der Längsmittelachse des Extraktionskörpers zwischen einer abgehobenen Öffnungsstellung und einer ersten Verschlussstellung (Vorverschlussstellung) linear zu bewegen, wobei die Verschlussanordnung in der ersten Verschlussstellung mittels der Haftanordnung am Extraktionskörper festgehalten wird. Auf diese Weise ist eine relativ einfache automatisierte Öffnung bzw. Verschließung des Extraktionskörpers durchführbar.

In vielen Anwendungsfällen wird als Filter eine Fritte vorgesehen, die vorzugsweise zwischen der wenigstens einen ersten Verschlussanordnung und dem Extraktionskörper gehaltert ist. Hierzu kann die Fritte insbesondere in einer Aussparung des Extraktionskörpers gehalten werden. Besonders vorteilhaft kann dann die Dichtung zwischen dem inneren Verschlusskörper und der Fritte vorgesehen werden. In einer praktischen Ausführung verbleibt durch das Einsetzen der Fritte in die Aussparung des Extraktionskörpers ein ringförmiger Spalt, wobei die vom inneren Verschlusskörper komprimierte Dichtung zweckmäßigerweise im Bereich des Spalts sowohl auf den Extraktionskörper als auch auf die Fritte drückt. Die Dichtung ist somit etwa mittig über den Spalt angeordnet und stellt damit zum einen nach außen den fluiddichten Verschluss her und sichert gleichzeitig die Fritte in der Aussparung des Extraktionskörpers.

Weitere Ausgestaltungen der Erfindung werden anhand der nachfolgenden Beschreibung zweier Ausführungsbeispiele und der Zeichnung näher erläutert.

In der Zeichnung zeigen
- Fig. 1: eine Schnittdarstellung einer erfindungsgemäßen Extraktionszelle im eingespannten Zustand,
- Fig. 2: eine vergrößerte Schnittdarstellung des Details A der Fig. 1,
- Fig. 3: eine Draufsicht der Extraktionszelle gemäß Fig. 1,
- Fig. 4: eine dreidimensionale Darstellung einer Verschlussanordnung gemäß einem zweiten Ausführungsbeispiel und
- Fig. 5: eine Schnittdarstellung der Verschlussanordnung gemäß Fig. 4.

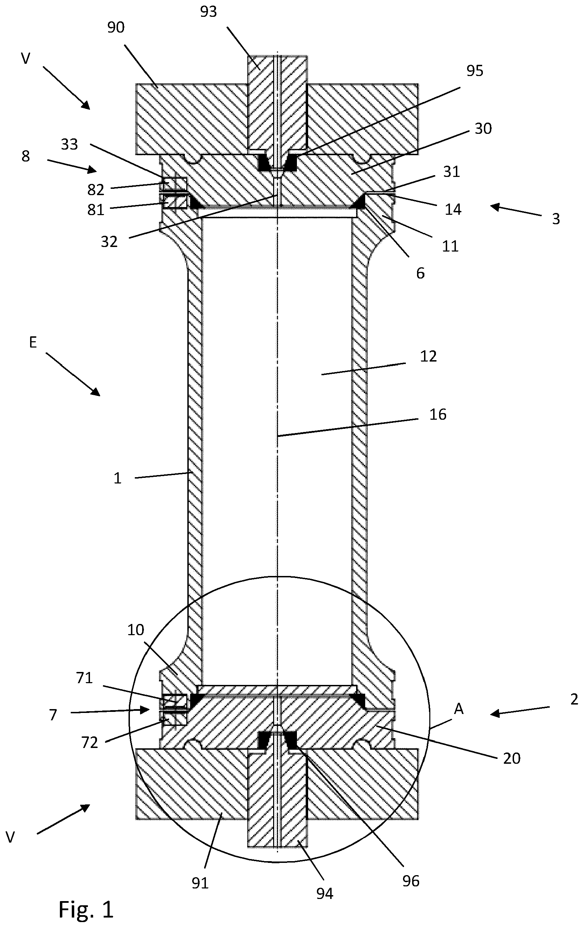

Die in Fig. 1 dargestellte Extraktionszelle E ist in einer Verspanneinheit V eingespannt und weist einen Extraktionskörper 1 zur Aufnahme einer nicht näher dargestellten Probe auf, der mit einer ersten Verschlussanordnung 2 und einer zweiten Verschlussanordnung 3 abdichtend verschlossen ist. Der Extraktionskörper 1 ist rohrförmig ausgebildet, wobei sein unteres, erstes Ende 10 mit der ersten Verschlussanordnung 2 und sein oberes, zweites Ende 11 mit der zweiten Verschlussanordnung verschlossen ist. Der Extraktionskörper weist ferner ein Innenraum 12 zur Aufnahme der Probe auf.

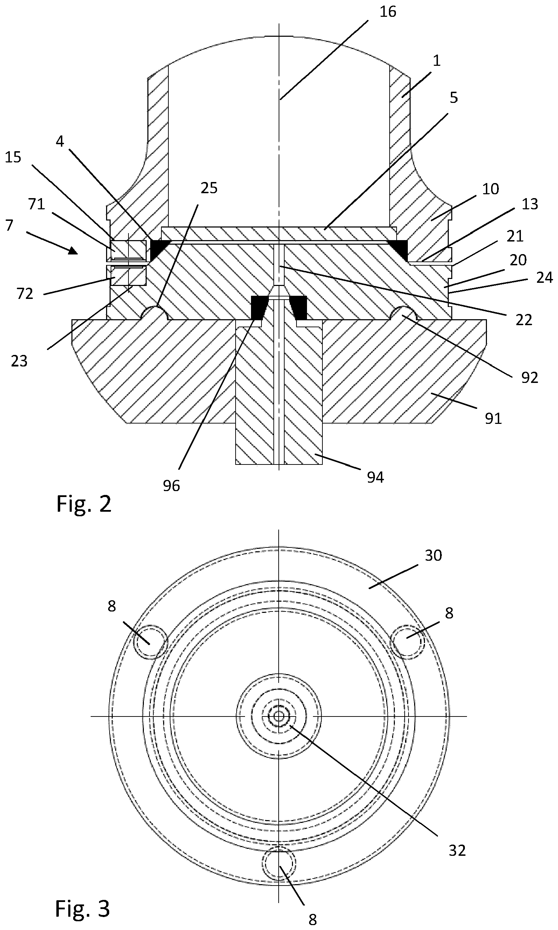

Die erste Verschlussanordnung 2 ist in Fig. 2 vergrößert dargestellt und weist einen ersten Verschlusskörper 20 auf, der wiederum einen umlaufenden Flansch 21 vorsieht, der mit einer ersten Stirnfläche 13 des Extraktionskörpers 1 zusammenwirkt und diesen an seinem unteren, ersten Ende 10 mittels einer ersten Dichtung 4 abdichtend verschließt. Der erste Verschlusskörper 20 weist ferner einen mittig angeordneten, ersten Fluidanschluss 22 auf, über den ein Fluid, beispielsweise ein Lösungsmittel zu- bzw. abgeführt werden kann. Zwischen dem Extraktionskörper 1 und dem ersten Verschlusskörper 20 ist ferner eine Fritte 5 vorgesehen, bei der es sich um eine poröse Platte handeln kann, die beispielsweise aus Polymeren oder Metall besteht. Die Fritte 5 soll dabei einerseits die meist pulverförmige Probe zurückhalten, während ein am oberen Ende des Extraktionskörpers zugeführtes Fluid durch die Fritte 5 und den ersten Fluidanschluss 22 abgeführt werden kann. Die Porosität der Fritte beträgt je nach Anwendung beispielsweise 1 bis 50 µm. Die zu untersuchende Probe hat hingegen eine entsprechend größere Partikelgröße. Die zweite Verschlussanordnung 3 am oberen, zweiten Ende 11 des Extraktionskörpers 1 ist identisch aufgebaut und weist dementsprechend einen zweiten Verschlusskörper 30 mit einem zweiten Fluidanschluss 32 auf. Weiterhin weist der zweite Verschlusskörper 30 einen zweiten Flansch 31 auf, der mit einer zweiten Stirnfläche 14 des Extraktionskörpers 1 sowie mit einer zweiten Dichtung 6 zusammenwirkt.

Damit die beiden Verschlusskörper 20, 30 beim Einsetzen der Extraktionszelle E in die Verspanneinheit V nicht versehentlich abfallen, werden die Verschlusskörper im Stand der Technik üblicherweise mit dem Extraktionskörper verschraubt. Beim erfindungsgemäßen Ausführungsbeispiel sind jedoch zwischen dem Extraktionskörper 1 und der ersten Verschlussanordnung 2 sowie zwischen dem Extraktionskörper 1 und der zweiten Verschlussanordnung 3 jeweils wenigstens eine Haftanordnung 7 bzw. 8 zum Festhalten der ersten und der zweiten Verschlussanordnung 2, 3 am Extraktionskörper 1 vorgesehen. Die beiden Haftanordnungen 7, 8 weisen dabei jeweils erste Haftelemente 71 bzw. 81 und mit diesen haftend zusammenwirkende zweite Haftelemente 72 bzw. 82 auf, wobei das jeweils erste Haftelement 71 bzw. 81 an den Enden des Extraktionskörpers 1 und das jeweils zweite Haftelement 72 bzw. 82 an den Verschlussanordnungen 2 bzw. 3 befestigt ist. Dazu weisen die erste und zweite Stirnfläche 13, 14 des Extraktionskörpers 1 erste Ausnehmungen 15 zur Aufnahme der ersten Haftelemente 71 bzw. 81 auf. In entsprechender Weise sind im ersten Flansch 21 und im zweiten Flansch 31 zweite Ausnehmungen 23 bzw. 33 vorgesehen, in denen die zweiten Haftelemente 72 bzw. 82 eingesetzt sind. Die ersten und zweiten Haftelemente können dabei insbesondere mittels Pressung, Schrumpfsitz, Verschraubung oder Klebung in den zugehörigen Ausnehmungen gehaltert werden. Aus Fig. 3 ist ersichtlich, dass im dargestellten Ausführungsbeispiel jeweils drei erste bzw. zweite Haftanordnungen 7, 8 gleichmäßig über den Umfang verteilt angeordnet sind.

Gemäß einer bevorzugten Ausgestaltung der Erfindung werden die Haftanordnungen durch permanentmagnetische Haftanordnungen ausgebildet, sodass lediglich ein Aufsetzen des ersten bzw. zweiten Verschlusskörpers 20, 30 auf die zugehörige erste bzw. zweite Stirnfläche 13, 14 des Extraktionskörper 1 ausreicht, um diese festzuhalten. Die Haftkraft ist dabei ausreichend groß zu bemessen, sodass sich die Verschlusskörper 20, 30, insbesondere der sich am unteren Ende des Extraktionskörpers 1 befindliche Verschlusskörper 20, nicht durch sein Eigengewicht und dem Gewicht der im Innenraum 12 befindlichen Probe unabsichtlich lösen können. Es sollte vielmehr eine ausreichend große, zusätzliche Kraft erforderlich sein, um den jeweiligen Verschlusskörper abzuheben. Das Abheben der Verschlusskörper kann dabei insbesondere in Verlängerung der Längsmittelachse 16 des Extraktionskörpers 1, also durch eine lineare Bewegung erfolgen.

Um ein automatisiertes Abnehmen des ersten bzw. zweiten Verschlusskörpers 20, 30 zu ermöglichen, ist es von Vorteil, wenn die beiden Verschlusskörper 20, 30 auf ihrer äußeren Umfangsfläche eine Einkerbung 24 aufweisen, mit der ein sicheres Greifen eines Roboters gewährleistet ist.

Die Verspanneinheit V, die Teil eines Extraktionssystems ist, weist einen oberen Spannbacken 90 und einen unteren Spannbacken 91 auf, zwischen denen die Extraktionszelle E eingespannt wird (Fig. 1). Damit eine einfache Zentrierung der Extraktionszelle in der Verspanneinheit V bewirkt werden kann, können die beiden Verschlussköper 20, 30 jeweils ringförmige Sicken 25 aufweisen, die mit entsprechend komplementär ausgebildeten Auswölbungen 92 zusammenwirken.

Durch eine entsprechende Druckbeaufschlagung der Spannbacken 90 bzw. 91 werden der erste und zweite Verschlusskörper 20, 30 auf den Extraktionskörper 1 gedrückt, sodass durch die erste und zweite Dichtung 4, 6 ein fluid- und druckdichter Verschluss erfolgt, der Anwendungen bis zu 100 bar und mehr ermöglicht. Dabei kann vorgesehen werden, dass der untere Spannbacken 91 ortsfest angeordnet ist und lediglich der obere Spannbacken 90 in Richtung der Längsmittelachse 16 verfahrbar ausgebildet ist. Die beiden Spannbacken 90, 91 weisen darüber hinaus eine längs der Längsmittelachse 16 verfahrbare Fluidzuführleitung 93 bzw. eine Fluidabführleitung 94 auf, die mittels Dichtungen 95 bzw. 96 fluiddicht am ersten Fluidanschluss 22 bzw. am zweiten Fluidanschluss 32 angeschlossen werden können. Es ist dabei in bestimmten Anwendungsfällen auch denkbar, dass zumindest ein Teil des Fluids über die Fluidabführleitung 94 zugeführt und abgeführt werden kann.

Das Extraktionsverfahren mit dem oben beschriebenen Extraktionssystem läuft wie folgt ab:
Zunächst wird der Extraktionskörper 1 an seinem unteren Ende mit der ersten Verschlussanordnung 2, der erste Dichtung 4 und der Fritte verschlossen, um die zu untersuchende Probe über das noch offene obere Ende einzubringen, wobei die Probe üblicherweise etwa ein Drittel bis zur Hälfte des Innenraums ausfüllt. Sodann wird die zweite Verschlussanordnung 3 mit der zweiten Dichtung aufgesetzt und die so zusammengebaute Extraktionszelle in die Verspanneinheit V eingesetzt. Die obere und untere Spannbacke 90, 91 werden mit dem erforderlichen Druck relativ zueinander zusammengeführt, um den Extraktionskörper druckdicht zu verschließen. Weiterhin werden die Fluidzuführleitung 93 und Fluidabführleitung 94 angeschlossen. Sodann wird über die Fluidzuführleitung 93 das vorgesehene Fluid, beispielsweise ein Lösungsmittel gegebenenfalls unter Druck zugeführt und zur beschleunigten Extraktion auf eine vorgegebene Temperatur mittels einer nicht näher dargestellten Heizeinrichtung erwärmt, wobei sich ein Druck von bis zu 100 bar einstellen kann. Drücke über diesem Wert können aus Sicherheitsgründen über ein nicht näher dargestelltes Überdruckventil abgelassen. Nach der Extraktion und nach Unterschreiten eines kritischen Sicherheitsdruckes öffnet im Anschluss an die Fluidabführleitung 94 ein Ventil und die Extraktionslösung wird über die Fluidabführleitung 94 abgeführt. Die am unteren Ende des Extraktionskörpers eingesetzte Fritte 5 hält dabei die Probe zurück und lässt lediglich das zugeführte Fluid zusammen mit den extrahierten Analyten passieren. Das abgeführte Fluid wird dann einer weiteren Bearbeitung und/oder Analyse unterzogen.

Anstelle des oben beschriebenen statischen Verfahrens kann die Extraktionszelle aber auch bei einem dynamischen Verfahren eingesetzt werden, bei dem das Extraktionsfluid die Extraktionszelle kontinuierlich durchströmt.

Je nach Anwendung besteht auch die Möglichkeit, den Extraktionskörper über eine geeignete Heizeinrichtung auf bis zu 200°C und mehr aufzuheizen.

Zum Entfernen und Entleeren der Extraktionszelle E wird der obere Spannbacken relativ zum unteren Spannbacken 91 auseinander gefahren, sodass die Extraktionszelle E manuell oder maschinell mittels eines Roboters entnommen werden kann. Die beiden Verschlussanordnungen 2, 3 können auf einfache Weise abgehoben werden, wobei lediglich die Anziehungskraft der Haftanordnungen zu überwinden ist. Dies kann daher insbesondere auch automatisiert erfolgen. Die Probe wird dann in den Abfall entleert, wobei die Fritte 5 und die Dichtungen 4, 6 ggf. zur Wiederverwendung zurückbehalten werden.

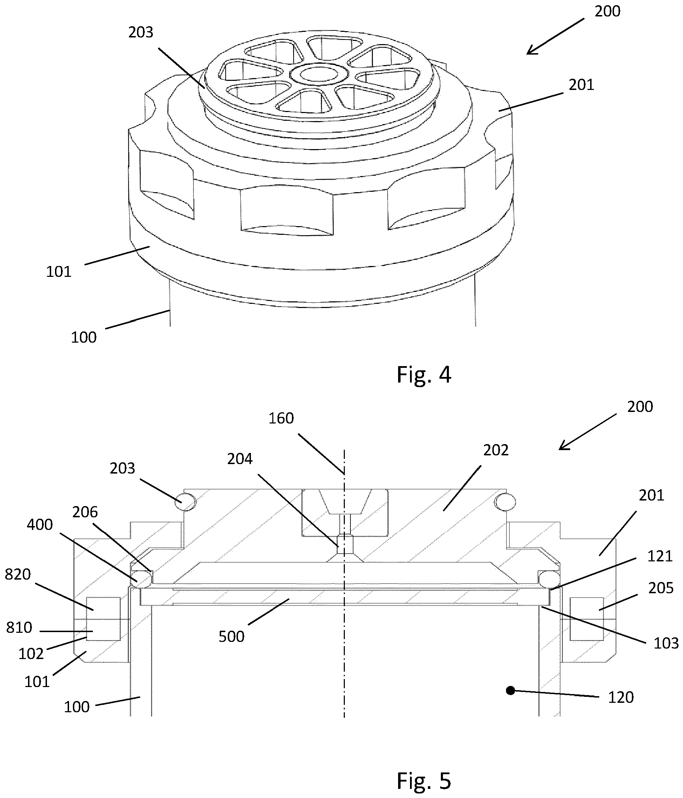

In den Figuren 4 und 5 ist eine Verschlussanordnung 200 gemäß einem zweiten Ausführungsbeispiel gezeigt, die als Alternative zur ersten bzw. zweiten Verschlussanordnung 2, 3 einsetzt werden kann. Sie zeichnet sich durch einen äußeren Verschlusskörper 201 und einen inneren Verschlusskörper 202 aus, wobei der innere Verschlusskörper 202 im äußeren Verschlusskörper 201 verschiebbar geführt ist. Damit die beiden Verschlusskörper 201, 202 zusammenhalten, umgreift zum einen der äußere Verschlusskörper 201 den inneren Verschlusskörper 202 und es ist zum anderen ein Federring 203 oder ein anderes Sicherungsmittel vorgesehen.

Der Extraktionskörper 100 weist am ersten und zweiten Ende jeweils einen Flansch 101 auf, die beim Verschließen des Extraktionskörpers 100 mit den äußeren Verschlusskörpern 201 in Wirkkontakt kommen. Hierzu sind in Ausnehmungen 102 im Flansch 101 erste Haftelemente 810 angeordnet, die mit zweiten Haftelementen 820 zusammenwirken, die in Ausnehmungen 205 des äußeren Verschlusskörpers 201 gehaltert sind.

Figur 5 zeigt die Verschlussanordnung 200 in einer ersten Verschlussstellung (Vorverschlussstellung), in welcher der äußere Verschlusskörper 201 mittels der beiden Haftelemente 810, 820 am Flansch 101 des Extraktionskörpers festgehalten wird. Zwischen dem Extraktionskörper 100 und dem inneren Verschlusskörper 202 ist ferner eine Dichtung 400 vorgesehen, die ausgehend von der in Figur 5 gezeigten ersten Verschlussstellung durch Verschiebung des inneren Verschlusskörpers 202 relativ zum äußeren Verschlusskörper 201 komprimierbar ist, um dadurch eine fluiddichte Verbindung zwischen dem Innenraum 120 des Extraktionskörpers 100 und des am inneren Verschlusskörpers 202 zentral vorgesehenen Fluidanschlusses 204 herzustellen.

Im dargestellten Ausführungsbeispiel ist in einer Aussparung 103 an einem Ende des Extraktionskörpers 100 eine Fritte 500 gehaltert. Zwischen der Fritte 500 und dem Extraktionskörpers 100 ergibt sich in der Aussparung 103 ein ringförmiger Spalt 121, der von der mittig über dem Spalt 121 angeordneten Dichtung 400 abdeckt wird, sodass die Dichtung 400 im komprimierten Zustand sowohl auf den Extraktionskörper 100 als auch auf die Fritte 500 drückt. Die Dichtung 400 ist in einer radial nach außen und in Richtung des Extraktionskörpers 100 offenen Umfangsnut 206 untergebracht. Der äußere Verschlusskörper 201 umgreift den inneren Verschlusskörper 202, sodass letzterer begrenzt in Richtung der Längsmittelachse 160 linear verschiebbar ist, indem beispielsweise äußere Druck durch die in Figur 1 dargestellte Verspanneinrichtung V ausgeübt wird. Damit der innere Verschlusskörper 202 beim Abheben der Verschlussanordnung 200 vom Extraktionskörper 100 nicht aus dem äußeren Verschlusskörper 201 herausrutscht, ist der innere Verschlusskörper 202 über den Federring 203 gesichert. Der Verstellweg des inneren Verschlusskörpers 202 gegenüber dem äußeren Verschlusskörper 201 ist so bemessen, dass die Dichtung 400 in ausreichendem Maße komprimiert werden kann, um den gewünschten druckdichten Verschluss herzustellen.

Da ein druckdichter Verschluss des Extraktionskörpers für Anwendungen von Drücken bis zu 100 bar nicht alleine durch die Haftanordnungen bewirkt werden kann, sind die Verschlussanordnungen der in den Figuren 1 bis 5 gezeigten beiden Ausführungsbeispiele so konzipiert, dass die Haftanordnungen lediglich dazu dienen, die Verschlusskörper in der Vorverschlussstellulng auf dem Extraktionskörper zu halten, die ein Befüllen mit einer Probe und den Transfer in die Verspanneinheit V gewährleistet. Der eigentliche druckdichte Verschluss wird erst in der Verspanneinheit V sichergestellt, indem die beiden gegenüberliegenden Verschlusskörper relativ zueinander verspannt werden.

Da die zusammenwirkenden Haftelemente nicht für den fluiddichten Verschluss verantwortlich sind, können diese in ihrer Haftkraft entsprechend geringer ausgebildet werden, sodass hierfür nur ein relativ kleiner Bauraum erforderlich ist. Gegenüber den bisher verwendeten Gewindeverschraubungen haben die Haftanordnungen aber den großen Vorteil, dass zum Abheben und Aufsetzen der Verschlusskörper lediglich eine lineare Bewegungsrichtung erforderlich ist, was aber natürlich nicht ausschließt, das zum leichteren Lösen der Verschlusskörper eine kurze Rotationsbewegung erfolgt.

## Patentansprüche

1. Extraktionszelle (E) zur Extraktion einer Probe mit
- einem rohrförmigen Extraktionskörper (1, 100) mit einem ersten und einem gegenüberliegenden zweiten Ende, der einen Innenraum (12, 120) zur Aufnahme der Probe aufweist,
- einer ersten Verschlussanordnung (2, 200) zum abdichtenden Verschließen des ersten Endes des rohrförmigen Extraktionskörpers (1, 100),
- einer zweiten Verschlussanordnung (3, 200) zum abdichtenden Verschließen des zweiten Endes des rohrförmigen Extraktionskörpers (1, 100), wobei
- die erste Verschlussanordnung (2, 200) einen ersten Fluidanschluss (22, 204) zum Zu- oder Abführen eines Fluids und die zweite Verschlussanordnung (3, 200) einen zweiten Fluidanschluss (32, 204) zum Zu- oder Abführen eines Fluids aufweist,
**dadurch gekennzeichnet, dass**
zwischen dem Extraktionskörper (1, 100) und der ersten Verschlussanordnung (2, 200) sowie zwischen dem Extraktionskörper (1, 100) und der zweiten Verschlussanordnung (3, 200) jeweils wenigstens eine als permanentmagnetische Haftanordnung oder als Klettverschluss oder als silikonbasierender Verschluss ausgebildete Haftanordnung (7, 8) zum Festhalten der ersten und zweiten Verschlussanordnung (2, 3, 200) am Extraktionskörper (1, 100) vorgesehen ist.

2. Extraktionszelle nach Anspruch 1, **dadurch gekennzeichnet, dass** die erste und zweite Verschlussanordnung (200) jeweils einen äußeren und einen inneren Verschlusskörper (201, 202) aufweisen, wobei der innere Verschlusskörper (202) am äußeren Verschlusskörper (201) verschiebbar geführt ist.

3. Extraktionszelle nach Anspruch 2, **dadurch gekennzeichnet, dass** zwischen dem Extraktionskörper (100) und dem inneren Verschlusskörper (202) eine Dichtung (400) vorgesehen ist, die durch Verschiebung des inneren Verschlusskörpers (202) relativ zum äußeren Verschlusskörper (201) zum Zwecke einer fluiddichten Verbindung komprimierbar ist.

4. Extraktionszelle nach Anspruch 3, **dadurch gekennzeichnet, dass** die Verschlussanordnung (200) eine erste Verschlussstellung aufweist, in welcher der äußere Verschlusskörper (201) über die wenigstens eine Haftanordnung (810, 820) am Extraktionskörper (100) festgehalten wird und sich der innere Verschlusskörper (202) relativ zum äußeren Verschlusskörper (201) in einer die Dichtung (400) nicht komprimierenden Stellung befindet und ferner eine zweite Verschlussstellung vorsieht, in welcher der äußere Verschlusskörper (201) über die Haftanordnungen (810, 820) am Extraktionskörper (100) festgehalten wird und sich der innere Verschlusskörper (202) relativ zum äußeren Verschlusskörper (201) in einer die Dichtung (400) komprimierenden Stellung befindet.

5. Extraktionszelle nach Anspruch 1, **dadurch gekennzeichnet, dass** die Haftanordnung wenigstens ein erstes Haftelement (81, 810) und wenigstens ein mit diesem haftend zusammenwirkendes zweites Haftelement (82, 820) aufweist, wobei das wenigstens eine erste Haftelement (81, 810) an den Enden des Extraktionskörpers (1, 100) und das wenigstens eine zweite Haftelement (82, 820) an den Verschlussanordnungen (2, 3, 200) befestigt ist.

6. Extraktionszelle nach Anspruch 2, **dadurch gekennzeichnet, dass** der Extraktionkörper (100) am ersten und zweiten Ende jeweils einen Flansch (101) aufweisen, die in der Schließstellung jeweils mit dem äußeren Verschlusskörper (201) der zugehörigen Verschlussanordnung in festhaltendem Wirkkontakt stehen, wobei die 1. und 2. Haftanordnung jeweils wenigstens ein erstes Haftelement (810) und wenigstens ein mit diesem haftend zusammenwirkendes zweites Haftelement (820) aufweisen, wobei das wenigstens eine erste Haftelement (810) am Flansch (101) des Extraktionskörpers (100) und das wenigstens eine zweite Haftelement (820) am äußeren Verschlusskörper (201) befestigt ist.

7. Extraktionszelle nach Anspruch 6, **dadurch gekennzeichnet, dass** die ersten Haftelemente (810) in Ausnehmungen (102) im Flansch (101) des Extraktionskörpers (100) und die zweiten Haftelemente (820) in Ausnehmungen (205) der äußeren Verschlusskörper (201) angeordnet sind.

8. Extraktionszelle nach Anspruch 7, **dadurch gekennzeichnet, dass** die ersten und zweiten Haftelemente (81, 810, 82, 820) mittels Pressung, Schrumpfsitz, Verschraubung oder Klebung in den zugehörigen Ausnehmungen (15, 33, 102, 205) gehaltert sind.

9. Extraktionszelle nach Anspruch 5, **dadurch gekennzeichnet, dass** an den Enden des Extraktionskörpers (1, 100) jeweils mehrere über den Umfang verteilt angeordnete erste Haftelemente (81, 810) vorgesehen sind, die mit einer entsprechenden Anzahl an zweiten Haftelementen (82, 820) an den beiden Verschlussanordnungen zusammenwirken.

10. Extraktionszelle nach Anspruch 1, **dadurch gekennzeichnet, dass** der Extraktionskörper (100) eine Längsmittelachse (160) aufweist und zumindest die erste Verschlussanordnungen (200) einen äußeren Verschlusskörper (201) und einen damit verbundenen inneren Verschlusskörper (202) aufweisen, wobei die Verschlussanordnungen (200) in Richtung der Längsmittelachse (160) zwischen einer abgehobenen Öffnungsstellung und einer 1. Verschlussstellung linear bewegbar ist, wobei die Verschlussanordnungen in der 1. Verschlussstellung mittels der Haftanordnung (810, 820) am Extraktionskörper festgehalten wird.

11. Extraktionszelle nach Anspruch 1, **dadurch gekennzeichnet, dass** zwischen der wenigstens einen Verschlussanordnung (200) und dem Extraktionskörper (100) eine Fritte (500) gehaltert ist.

12. Extraktionszelle nach Anspruch 11, **dadurch gekennzeichnet, dass** die Fritte (5, 500) in einer Aussparung (103) des Extraktionskörpers (1, 100) gehaltert ist.

13. Extraktionszelle nach Anspruch 3 und 12, **dadurch gekennzeichnet, dass** die Aussparung (103) zur Halterung der Fritte (500) an einem Ende des Extraktionskörpers (100) angeordnet ist und ferner die Dichtung (400) zwischen dem inneren Verschlusskörper (202) und der Fritte (500) vorgesehen ist.

14. Extraktionszelle nach Anspruch 13, **dadurch gekennzeichnet, dass** zwischen der Fritte (500) und dem Extraktionskörper (100) ein ringförmiger Spalt (121) vorhanden ist und die vom inneren Verschlusskörper (202) komprimierte Dichtung (400) im Bereich des Spalts (121) sowohl auf den Extraktionskörper (100) als auch auf die Fritte (500) drückt.

## Claims

1. Extraction cell (E) for extracting a sample comprising
- a tubular extraction body (1, 100) having a first end and an opposite second end which has an interior space (12, 120) for receiving the sample,
- a first closure arrangement (2, 200) for sealingly closing the first end of the tubular extraction body (1, 100),
- a second closure arrangement (3, 200) for sealingly closing the second end of the tubular extraction body (1, 100), wherein
- the first closure arrangement (2, 200) has a first fluid port (22, 204) for supplying or discharging a fluid and the second closure arrangement (3, 200) has a second fluid port (32, 204) for supplying or discharging a fluid,
**characterized in that**
between the extraction body (1, 100) and the first closure arrangement (2, 200) and between the extraction body (1, 100) and the second closure arrangement (3, 200), at least one adhesive arrangement (7, 8) designed as a permanent-magnetic adhesive arrangement or a Velcro fasteners or a silicone-based fastener, is provided for holding the first and the second closure arrangement (2, 3, 200) on the extraction body (1, 100).

2. Extraction cell according to claim 1, **characterized in that** the first closure arrangement and the second closure arrangement (200) each have an outer closure body and an inner closure body (201, 202), the inner closure body (202) being displaceably guided on the outer closure body (201).

3. Extraction cell according to claim 2, **characterized in that** a seal (400) is provided between the extraction body (100) and the inner closure body (202), which can be compressed by the displacement of the inner closure body (202) relative to the outer closure body (201) for the purpose of a fluid-tight connection.

4. Extraction cell according to claim 3, **characterized in that** the closure arrangement (200) has a first closure position, in which the outer closure body (201) is held on the extraction body (100) via the at least one adhesive arrangement (810, 820) and the inner closure body (202) is in a position which does not compress the seal (400) relative to the outer closure body (201) and furthermore provides a second closure position, in which the outer closure body (201) is held on the extraction body (100) via the adhesive arrangements (810, 820) and the inner closure body (202) is in a position which compresses the seal (400) relative to the outer closure body (201).

5. Extraction cell according to claim 1, **characterized in that** the adhesive arrangement has at least one first adhesive element (81, 810) and at least one second adhesive element (82, 820) interacting therewith in an adhesive manner, the at least one first adhesive element (81, 810) being attached to the ends of the extraction body (1, 100) and the at least one second adhesive element (82, 820) being attached to the closure arrangements (2, 3, 200).

6. Extraction cell according to claim 2, **characterized in that** the extraction body (100) has a flange (101) in each case at the first end and at the second end which, in the closure position, are in holding operative contact with the outer closure body (201) of the associated closure arrangement, the first and the second adhesive arrangement each having at least one first adhesive element (810) and at least one second adhesive element (820) interacting therewith in an adhesive manner, the at least one first adhesive element (810) being attached to the flange (101) of the extraction body (100) and the at least one second adhesive element (820) being attached to the outer closure body (201).

7. Extraction cell according to claim 6, **characterized in that** the first adhesive elements (810) are arranged in recesses (102) in the flange (101) of the extraction body (100) and the second adhesive elements (820) are arranged in recesses (205) of the outer closure body (201).

8. Extraction cell according to claim 7, **characterized in that** the first and the second adhesive elements (81, 810, 82, 820) are held in the associated recesses (15, 33, 102, 205) by means of pressing, shrink fit, screwing, or gluing.

9. Extraction cell according to claim 5, **characterized in that** a plurality of first adhesive elements (81, 810) is provided at the ends of the extraction body (1, 100) in each case, which first adhesive elements are distributed over the circumference and interact with a corresponding number of second adhesive elements (82, 820) on the two closure arrangements.

10. Extraction cell according to claim 1, **characterized in that** the extraction body (100) has a longitudinal center axis (160) and at least the first closure arrangements (200) have an outer closure body (201) and an inner closure body (202) connected thereto, the closure arrangements (200) being linearly movable in the direction of the longitudinal center axis (160) between a raised open position and a first closure position, the closure arrangements being held on the extraction body in the first closure position by means of the adhesive arrangement (810, 820).

11. Extraction cell according to claim 1, **characterized in that** a frit (500) is held between the at least one closure arrangement (200) and the extraction body (100).

12. Extraction cell according to claim 11, **characterized in that** the frit (5, 500) is held in a recess (103) in the extraction body (1, 100).

13. Extraction cell according to claim 3 and 12, **characterized in that** the recess (103) for holding the frit (5, 500) is arranged at one end of the extraction body (100) and furthermore the seal (400) is provided between the inner closure body (202) and the frit (500).

14. Extraction cell according to claim 13, **characterized in that** there is an annular gap (121) between the frit (500) and the extraction body (100) and the seal (400) compressed by the inner closure body (202) in the region of the gap (121) presses onto the extraction body (100) as well as onto the frit (500).

## Revendications

1. Cellule d'extraction (E) servant à l'extraction d'un échantillon, ladite cellule d'extraction comprenant :
- un corps d'extraction de forme tubulaire (1, 100) comprenant une première et une seconde extrémité opposée, lequel corps d'extraction présente un espace intérieur (12, 120) servant à la réception de l'échantillon,
- un premier dispositif de fermeture (2, 200) pour fermer de manière étanche la première extrémité du corps d'extraction de forme tubulaire (1, 100),
- un deuxième dispositif de fermeture (3, 200) pour fermer de manière étanche la seconde extrémité du corps d'extraction de forme tubulaire (1, 100),
- où le premier dispositif de fermeture (2, 200) présente un premier raccord de fluide (22, 204) pour l'arrivée ou l'évacuation d'un fluide, et le deuxième dispositif de fermeture (3, 200) présente un second raccord de fluide (32, 204) pour l'arrivée ou l'évacuation d'un fluide,
**caractérisée**
**en ce qu'**au moins un dispositif d'adhérence (7, 8) servant à maintenir le premier et le second dispositif de fermeture (2, 3, 200) sur le corps d'extraction (1, 100) est prévu à chaque fois entre le corps d'extraction (1, 100) et le premier dispositif de fermeture (2, 200) ainsi qu'entre le corps d'extraction (1, 100) et le deuxième dispositif de fermeture (3, 200), ledit dispositif d'adhérence étant configuré comme un dispositif d'adhérence à aimant permanent ou comme une fermeture Velcro ou bien comme une fermeture à base de silicone.

2. Cellule d'extraction selon la revendication 1, **caractérisée en ce que** le premier et le deuxième dispositif de fermeture (200) présentent à chaque fois un corps de fermeture extérieur et intérieur (201, 202), où le corps de fermeture intérieur (202) est guidé en étant déplaçable sur le corps de fermeture extérieur (201).

3. Cellule d'extraction selon la revendication 2, **caractérisée en ce qu'**il est prévu un joint d'étanchéité (400) placé entre le corps d'extraction (100) et le corps de fermeture intérieur (202), lequel joint d'étanchéité, sous l'effet du déplacement du corps de fermeture intérieur (202) par rapport au corps de fermeture extérieur (201), est compressible dans le but d'un raccordement étanche aux fluides.

4. Cellule d'extraction selon la revendication 3, **caractérisée en ce que** le dispositif de fermeture (200) présente une première position de fermeture dans laquelle le corps de fermeture extérieur (201) est maintenu sur le corps d'extraction (100) par l'au moins un dispositif d'adhérence (810, 820), et le corps de fermeture intérieur (202) se trouve, par rapport au corps de fermeture extérieur (201), dans une position ne comprimant pas le joint d'étanchéité (400), ledit dispositif de fermeture prévoyant en outre une deuxième position de fermeture dans laquelle le corps de fermeture extérieur (201) est maintenu sur le corps d'extraction (100) par les dispositifs d'adhérence (810, 820), et le corps de fermeture intérieur (202) se trouve, par rapport au corps de fermeture extérieur (201), dans une position comprimant le joint d'étanchéité (400).

5. Cellule d'extraction selon la revendication 1, **caractérisée en ce que** le dispositif d'adhérence présente au moins un premier élément d'adhérence (81, 810) et au moins un deuxième élément d'adhérence (82, 820) agissant par adhérence, de façon conjointe, avec ce premier élément d'adhérence, où l'au moins un premier élément d'adhérence (81, 810) est fixé au niveau des extrémités du corps d'extraction (1, 100), l'au moins un deuxième élément d'adhérence (82, 820) étant fixé sur les dispositifs de fermeture (2, 3, 200).

6. Cellule d'extraction selon la revendication 2, **caractérisée en ce que** le corps d'extraction (100) présente à chaque fois une bride (101) au niveau de la première et de la seconde extrémité, lesquelles brides, en position de fermeture, sont à chaque fois en contact actif continu avec le corps de fermeture extérieur (201) du dispositif de fermeture associé, où le 1^{er} et le 2^{ème} dispositif d'adhérence présentent à chaque fois au moins un premier élément d'adhérence (810) et au moins un deuxième élément d'adhérence (820) agissant par adhérence, de façon conjointe, avec ce premier élément d'adhérence, où l'au moins un premier élément d'adhérence (810) est fixé sur la bride (101) du corps d'extraction (100), l'au moins un deuxième élément d'adhérence (820) étant fixé sur le corps de fermeture extérieur (201).

7. Cellule d'extraction selon la revendication 6, **caractérisée en ce que** les premiers éléments d'adhérence (810) sont disposés dans des creux (102) se trouvant dans la bride (101) du corps d'extraction (100), les deuxièmes éléments d'adhérence (820) étant disposés dans des creux (205) des corps de fermeture extérieurs (201).

8. Cellule d'extraction selon la revendication 7, **caractérisée en ce que** les premiers et deuxièmes éléments d'adhérence (81, 810, 82, 820) sont maintenus dans les creux associés (15, 33, 102, 205), par compression, par ajustement fretté, par vissage ou par collage.

9. Cellule d'extraction selon la revendication 5, **caractérisée en ce qu'**il est prévu à chaque fois, au niveau des extrémités du corps d'extraction (1, 100), plusieurs premiers éléments d'adhérence (81, 810) disposés en étant répartis sur le pourtour, lesquels premiers éléments d'adhérence agissent de façon conjointe, au niveau des deux dispositifs de fermeture, avec un nombre correspondant de deuxièmes éléments d'adhérence (82, 820).

10. Cellule d'extraction selon la revendication 1, **caractérisée en ce que** le corps d'extraction (100) présente un axe central longitudinal (160), et au moins les premiers dispositifs de fermeture (200) présentent un corps de fermeture extérieur (201) et un corps de fermeture intérieur (202) relié audit corps de fermeture extérieur, où les dispositifs de fermeture (200) peuvent être déplacés de façon linéaire, en direction de l'axe central longitudinal (160), entre une position d'ouverture relevée et une 1^{ère} position de fermeture, où les dispositifs de fermeture se trouvant dans la 1^{ère} position de fermeture sont maintenus sur le corps d'extraction au moyen du dispositif d'adhérence (810, 820).

11. Cellule d'extraction selon la revendication 1, **caractérisée en ce qu'**une fritte (500) est maintenue entre l'au moins un dispositif de fermeture (200) et le corps d'extraction (100).

12. Cellule d'extraction selon la revendication 11, **caractérisée en ce que** la fritte (5, 500) est maintenue dans un évidement (103) du corps d'extraction (1, 100).

13. Cellule d'extraction selon les revendications 3 et 12, **caractérisée en ce que** l'évidement (103) servant à la fixation de la fritte (500) est disposé au niveau d'une extrémité du corps d'extraction (100) et, en outre, le joint d'étanchéité (400) est prévu entre le corps de fermeture intérieur (202) et la fritte (500).

14. Cellule d'extraction selon la revendication 13, **caractérisée en ce qu'**il y a un interstice de forme annulaire (121) entre la fritte (500) et le corps d'extraction (100), et le joint d'étanchéité (400) comprimé par le corps de fermeture intérieur (202) vient en appui, dans la zone de l'interstice (121), aussi bien sur le corps d'extraction (100) que sur la fritte (500).
